# EUROPÄISCHE PATENTSCHRIFT

(11) **EP 3 115 713 B1**
(45) Veröffentlichungstag und Bekanntmachung des Hinweises auf die Patenterteilung: **04.07.2018**
(21) Anmeldenummer: 16177999.6
(22) Anmeldetag: 05.07.2016
(51) Int. Cl.: F24T 10/00

(54) **VERFAHREN UND ANLAGE ZUR ENERGIEGEWINNUNG AUS GEOTHERMISCHER ENERGIE**
METHOD AND PLANT FOR PRODUCING ENERGY FROM GEOTHERMAL ENERGY
PROCÉDÉ ET DISPOSITIF DE RÉCUPERATION D'ÉNERGIE À PARTIR DE L'ÉNERGIE GÉOTHERMIQUE

(30) Priorität: 09.07.2015 DE 102015111146
(43) Veröffentlichungstag der Anmeldung: 11.01.2017
(73) Patentinhaber: Trias V&M GmbH, 93055 Regensburg (DE); Kapp, Bernd, 17258 Feldbergr Seenlandschaft (DE)
(72) Erfinder: Kapp, Bernd, 17258 Feldberger Seenlandschaft (DE)
(74) Vertreter: Glück Kritzenberger Patentanwälte PartGmbB

(56) Entgegenhaltungen:
- EP-A1- 0 913 910
- WO-A2-2009/026044
- WO-A2-2011/099196
- DE-A1- 19 842 168
- US-A1- 2008 073 058
- US-A1- 2009 175 737

## Beschreibung

### Technisches Gebiet

Die Erfindung bezieht sich auf ein Verfahren und eine Anlage zur Energiegewinnung aus geothermischer Energie.

### Stand der Technik

Unter "Energiegewinnung aus geothermischer Energie" wird die Nutzung der geothermischen Energie verstanden, welche in heißen Tiefenwässern oder in heißen, trockenen, tiefliegenden Gesteinsschichten enthalten ist. Zur öbertägigen Nutzung der geothermischen Energie wird in das heiße, trockene Gestein gepumptes Wasser oder das heiße Tiefenwasser selbst über eine Förderbohrung an die Erdoberfläche gepumpt. Ein Beispiel für ein solches Verfahren zur Wärmegewinnung aus geothermischer Energie ist aus der DE 10 2009 021 160 A1 bekannt.

Bei der Energiegewinnung unter Nutzung geothermischer Energie wird nicht auf limitierte fossile Energieresourcen zurückgegriffen, sondern die praktisch unbegrenzt vorhandene geothermische Energie aus dem Erdinneren genutzt. Geothermische Energie kann sowohl als reine Wärmegewinnung für Heizzwecke als auch zur Produktion elektrischer Energie eingesetzt werden. Eine Kombination von Wärme- und Elektrizitätsgewinnung ergibt sich, wenn die Restwärme des Wassers, das bereits zur Erzeugung von Elektrizität genutzt wurde, zu Heizzwecken verwendet wird. Nach der obertägigen Energiegewinnung wird das auf ca. 40 - 80°C abgekühlte Tiefenwasser über eine Reinjektionsbohrung dem unterirdischen Reservoir wieder zugeführt.

Während im Falle der Nutzung geothermischer Energie für Heizzwecke lediglich ein Wärmeaustausch des Tiefenwassers mit einem in ein Heizsystem einspeisbaren Wasser und/oder eine Anlage zur Verteilung des heißen Tiefenwassers zu den Endnutzern und zur Rückführung des abgekühlten Tiefenwassers notwendig sind, ist es für die Zwecke der Stromproduktion aus betrieblichen Gründen oftmals erforderlich, die Energie des heißen Tiefenwassers auf einen anderen Typ von Energieträger zu übertragen, der als dampfförmiges Niedertemperatur-Arbeitsfluid die zur Stromerzeugung verwendeten Generatoren antreiben kann.

Um unter Nutzung der geothermischen Energie aus Wasser Strom erzeugen zu können, wird eine geothermische Quelle benötigt, die Wasser mit einer Temperatur von über 100°C, in der Regel von mehr als 110°C liefert. In den meisten Teilen der Welt sind zur Erschließung von Tiefenwasser einer derartigen Temperatur mehrere tausend Meter tiefe Förderbohrungen notwendig. Diese Förderbohrungen werden in geeignete heißwasserführende geologische Formationen vorgetrieben. Das heiße Tiefenwasser steht in der Regel nicht unter einem so hohen Druck, dass es in den für die Energiegewinnung erforderlichen Mengen aus der Förderbohrung direkt an die Erdoberfläche transportiert wird.

Es ist somit erforderlich, das heiße Tiefenwasser zu den oberirdischen Anlagen zur Energiegewinnung zu pumpen. Um eine Anlage zur geothermischen Energiegewinnung wirtschaftlich betreiben zu können, werden an der Erdoberfläche große Mengen an Tiefenwasser pro Zeiteinheit benötigt. Die Förderpumpen müssen also in der Lage sein, Tiefenwasser mit hoher, möglichst konstanter Förderleistung an die Erdoberfläche zu pumpen. Insbesondere zur Stromproduktion aus heißem Tiefenwasser sind daher entsprechend starke Pumpen mit einer Motorleistung von mehreren hundert kW bis zu 2 .000 kW erforderlich. Diese Pumpen werden im Förderbohrloch in der Regel als Tauchmotorpumpen oder als Line Shaft Pumps unterhalb des Pegels des Tiefenwassers installiert. Die Einbautiefe der Tiefpumpen liegt in der Regel bis zu 1.000 m und mehr unter der Erdoberfläche.

Derartige Tauchmotorpumpen bzw. Line Shaft Pumpen gehören zu den für den erfolgreichen Betrieb einer Geothermieanlage besonderes kritischen Anlagenteilen. Für den wirtschaftlichen Betrieb einer Geothermieanlage mit der gewünschten Betriebskonstanz ist es erforderlich, dass das heiße Tiefenwasser der Anlage zur Stromproduktion in gleichbleibend großen Mengen von bis zu 200 l/s und mit möglichst gleichbleibender Temperatur über lange Zeiträume zur Verfügung steht.

Um diese Vorgaben zu erfüllen, werden teure leistungsstarke Spezialpumpen eingesetzt, die unter extremen Arbeitsbedingungen im heißen Tiefenwasser zuverlässig funktionieren müssen. Ein konstanter Langzeitbetrieb wird dabei auch dadurch erschwert, dass das geförderte Tiefenwasser in der Regel aggressive und/oder verschleißfördernde (abrasive) Bestandteile in gelöster Form (z. B. als Salze oder Gase) und in Teilchenform (Mineralien, Trüben) enthält, die Einfluss auf die Betriebsdauer der Pumpe und die Häufigkeit ihrer Abschaltung zu Wartungszwecken haben. Insbesondere beim Fördern von heißen (> 100°C), vorwiegend Na-Ca-hydogenkarbonatischen-Cl Thermalwässern aus Tiefbohrungen bis zu 5.000 m Tiefe können Ablagerungen verschiedener Mineralspezies in Anlageneinrichtungen und insbesondere in den Tiefpumpen erfolgen.

Die Tauchmotorpumpen müssen zur Wartung aus großer Tiefe aus dem Bohrloch an die Erdoberfläche geholt werden. Um die Unterbrechung des Betriebs der Geothermieanlage und die damit verbundenen Einnahmenverluste möglichst gering zu halten, ist für die Dauer der Wartungsarbeiten die Installation einer gemieteten oder vorzuhaltenden Ersatzpumpe denkbar. Der Aus- und Einbau der Pumpen ist jedoch sehr aufwändig. Zudem handelt es sich bei den Pumpen um teure, nur in sehr geringen Stückzahlen existierende Aggregate. Die hohen Anschaffungskosten und die außerordentlich zeit- und kostenaufwändige Wartung der Tauchmotorpumpen belasten die Wirtschaftlichkeit der Gesamtanlage erheblich.

Ein im Stand der Technik verfolgter Ansatz zur Verlängerung der Lebensdauer und der Verminderung der Störanfällligkeit von Tauchmotorpumpen ist es, die Pumpen und insbesondere deren Motorsegment zu kühlen. Die vorgeschlagenen Lösungen beruhen alle darauf, einen Kühlkreislauf zu installieren, durch den verschiedene Arten von Kühlflüssigkeit von einem obertägig angeordneten Wärmetauscher, in dem die Temperatur der Kühlflüssigkeit gesenkt wird, zu einem Kühlmantel der Tauchmotorpumpe geführt werden. Exemplarisch für die Vielzahl an solcher bekannten Lösungen seien die WO 2012/173985 A2, die US 2010/0329908 A1, die US 2009/0272129 A1 und die US 4 126 406 genannt.

Die US 2008/0073058 A1 offenbart ein Verfahren und eine Anlage zur Energiegewinnung aus geothermischer Energie, bei dem das heiße Formationsfluid mit Hilfe einer Förderpumpe durch eine thermisch isolierte Rohrleitung aus einer Förderbohrung gefördert wird. Das heiße Formationsfluid wird obertägig durch einen Wärmetauscher geleitet, kühlt sich dabei ab und wird dann durch eine Rückführrohrleitung in die Förderbohrung rückgeführt, wo es sich mit dem heißen Formationsfluid mischt.

Aus der US 2009/175737 A1 ist eine Tauchpumpe zur Förderung von Grundwasser bekannt, bei der das geförderte Grundwasser durch den Kühlmantel der Förderpumpe strömt und die Pumpe dadurch gekühlt wird. Aus der WO 2011/099196 A2 ist eine Tauchumpe mit einem extern zugeführten Kühlmittel bekannt. Trotz dieser aus dem Stand der Technik bekannten Ansätze zur Kühlung von Tauchmotorpumpen von Geothermalanlagen bleibt es eine vordringliche Aufgabe die Lebensdauer von Tauchmotorpumpen zu verlängern und deren Störanfällligkeit zu vermindern.

### Darstellung der Erfindung

Hier setzt die Erfindung an. Es soll ein Verfahren und eine Anlage zur Energiegewinnung aus geothermischer Energie zur Verfügung gestellt werden, das bzw. die die Lebensdauer von Tauchmotorpumpen verlängert und deren Störanfällligkeit vermindert. Diese Aufgabe wird erfindungsgemäß durch das Verfahren gemäß unabhängigem Anspruch 1 und die Anlage gemäß unabhängigem Anspruch 9 gelöst. Weitere vorteilhafte Aspekte, Details und Ausgestaltungen der Erfindung ergeben sich aus den abhängigen Ansprüchen, der Beschreibung sowie den Zeichnungen.

Die vorliegende Erfindung stellt ein Verfahren zur Energiegewinnung aus geothermischer Energie zur Verfügung, wobei das Verfahren die folgenden Schritte umfasst:
- Fördern eines heißen Formationsfluids aus einer Förderbohrung durch eine Förderrohrleitung unter Verwendung einer Förderpumpe, wobei die Förderpumpe ein Pumpensegment, ein Motorsegment und einen Kühlmantel aufweist, wobei der Kühlmantel zumindest in Teilbereichen mit dem Motorsegment in thermischen Kontakt steht und der Kühlmantel eine Kühlfluideintrittsöffnung zur Aufnahme eines Kühlfluids und eine Kühlfluidaustrittsöffnung zur Abgabe des Kühlfluids aufweist,
- Durchleiten des heißen Formationsfluids durch eine obertägige Einrichtung zur Energiegewinnung unter Abkühlung des heißen Formationsfluids und Bildung eines abgekühlten Formationsfluids,
- Rückführung eines Teils des abgekühlten Formationsfluids in die Förderbohrung durch eine zumindest abschnittsweise thermisch isolierte Rückführrohrleitung, wobei die Austrittsöffnung der Rückführrohrleitung eine im Bereich der Kühlfluideintrittsöffnung des Kühlmantels der Förderpumpe angeordnete Formationsfluidaustrittsöffnung für den Austritt des rückgeführten abgekühlten Formationsfluids bildet,
- Durchleiten zumindest eines Anteils des rückgeführten Teils des abgekühlten Formationsfluids durch den Kühlmantel der Förderpumpe.

Mit dem Begriff "Formationsfluid" wird im Rahmen der vorliegenden Anmeldung jede Art von Tiefenwasser mit beliebig unterschiedlicher Zusammensetzung bezeichnet. Die als "Formationsfluid" bezeichneten Arten von Tiefenwasser enthalten in der Regel Anteile an Calciumhydrogencarbonat. Von dem Begriff "Formationsfluid" sind insbesondere auch Fluide umfasst wie sie bei der Ölförderung auftreten.

Wie aus dem Stand der Technik bekannt wird auch bei dem erfindungsgemäßen Verfahren das geförderte, heiße Formationsfluid einer obertägig installierten Einrichtung zur Energiegewinnung zugeführt. Dort wird dem heißen Formationsfluid Wärmeenergie entzogen und auf ein beliebiges Arbeitsfluid übertragen, welches nachfolgend zur Gewinnung von elektrischer Energie oder zu Heizzwecken eingesetzt werden kann. Durch den Entzug von Wärmeenergie kühlt das Formationsfluid ab. Erfindungsgemäß wird dem abgekühlten Formationsfluid mit Hilfe von obertägigen Rohrleitungen ein Teilstrom entnommen, über den sogenannten Bohrlochkopf (wellhead) wieder zurück in die Förderbohrung und schließlich durch eine thermisch isolierte Rückführrohrleitung bis zu der in der Förderbohrung angeordneten Förderpumpe geführt. Zumindest ein Anteil des rückgeführten Teils des abgekühlten Formationsfluids wird dort durch den Kühlmantel der Förderpumpe geleitet. Dadurch wird eine effektive Kühlung insbesondere des Motorsegments der Förderpumpe erreicht, wodurch die thermische Belastung der Förderpumpe verringert, deren Lebensdauer erhöht und auch deren Störanfälligkeit vermindert wird.

Unter dem Begriff "Förderpumpe" wird im Rahmen der vorliegenden Anmeldung jede Art von für geothermische Anlagen geeigneten Pumpen verstanden, insbesondere also Tiefpumpen, Tauchmotorpumpen und Electrical submersible pumps (ESP).

Unter dem Begriff "Motorsegment" wird im Rahmen der vorliegenden Anmeldung der Antriebsmotor mit einem optional vorsehbaren und oberhalb oder unterhalb angeordneten Dichtungssegment verstanden.

Unter dem Ausdruck "Ansaugbereich der Förderpumpe" wird im Rahmen der vorliegenden Anmeldung der Eintrittsquerschnitt am Pumpeneintritt verstanden, der in Abhängigkeit vom Pumpentyp und Bauweise der Pumpe am unteren Ende, an einer Seite oder in Ausnahmefällen auch am oberen Ende der Förderpumpe angeordnet sein kann. Dem Fachmann ist eine genaue Festlegung des Ansaugbereichs der Förderpumpe klar. Üblicherweise liegt der Ansaugbereich von sogenannten ESP-Systemen am unteren Ende der Pumpensektion und der Motor-/Sealsektion. Im Falle von LSP-Systemen liegt der Ansaugbereich auf der der Erdoberfläche abgewandten Seite, also am unteren Ende der Förderpumpe.

Einen weiteren, besonderen Vorteil des erfindungsgemäßen Verfahrens stellt die Tatsache dar, dass ausschließlich zuvor gefördertes Formationsfluid rückgeführt wird. Eine Verunreinigung des Formationsfluids durch irgendwelche Zusatzstoffe wird somit vermieden. Ökologisch und in Folge auch ökonomisch nachteilige Auswirkungen durch das in den Aquifier zurückgeführte Fluid können dadurch ausgeschlossen werden. Zudem werden die Notwendigkeit der Bereitstellung eines gesonderten Kühlfluids zur Kühlung der Förderpumpe und die damit verbundenen Kosten vermieden.

Das erfindungsgemäße Verfahren kann problemlos in bestehende Anlagen mit Standard ESP-Systemen integriert werden. Die traditionelle Einbaulage der ESP-Systeme (Motorsegment unten, Seal in der Mitte, Pumpensegment oben) bleibt erhalten, d.h. aus dem erfindungsgemäßen Verfahren ergeben sich keine spezifischen Konfigurationsanforderungen an das ESP-System. Der Betrieb und insbesondere auch das Anfahren des ESP-Systems kann "mit" und "ohne" Rückführung des abgekühlten Formationsfluids erfolgen. Eine geothermische Anlage mit einer Rückführrohrleitung kann also auch konventionell ohne Rückführung des abgekülten Formationsfluids betrieben werden.

Unabhängig davon, ob abgekühltes Formationsfluid in das Förderbohrloch rückgeführt wird oder nicht, steht die thermische Leistung des geförderten Formationsfluids immer vollständig für die obertägige thermische Nutzung (Verstromung, Wärmeauskopplung) zur Verfügung. Aufgrund der durch die Rückführung eines Teils des abgekühlten Formationsfluids in die Förderbohrung verursachten Absenkung der Temperatur des geförderten Formationsfluids kommt es nur zu einer unwesentlichen Verringerung des elektrischen Wirkungsgrades im Falle einer Verstromung des geförderten Formationsfluids. Dieser unwesentliche Nachteil wird durch die längeren Einsatzzeiten, die geringere Störanfälligkeit und den geringeren Wartungsaufwand für die einzelnen Anlagenkomponenten und insbesondere die Förderpumpe bei weitem überwogen.

Der zumindest in Teilbereichen mit dem Motorsegment der Förderpumpe in Kontakt stehende Kühlmantel kann nach außen mit einer thermischen Isolierung ausgestattet sein oder nicht isoliert verwendet werden.

Vorzugsweise weist das heiße Formationsfluid eine Temperatur von wenigstens 100°C, besonders bevorzugt von wenigstens 110°C auf. Die genannten Temperaturen ermöglichen eine effektive Energiegewinnung unter Abkühlung des heißen Formationsfluids.

Nach der obertägigen thermischen Nutzung des Formationsfluides erfolgt in der Regel eine Reinjektion des abgekühlten Formationsfluids in eine von der Förderbohrung beabstandete Reinjektionsbohrung. Neben dem Teil des abgekühlten Formationsfluids, der durch eine Rückführrohrleitung in die Förderbohrung rückgeführt wird, fällt ein weiterer, größerer Teil an abgekühltem Formationsfluid an, welcher vorteilhafterweise in eine von der Förderbohrung beabstandete Injektionsbohrung gefördert wird.

Bevorzugt weist das heiße Formationsfluid einen Anteil an gelöstem Kohlendioxid von mindestens 50 ppmV oder einen Anteil an Hydrogencarbonat von mindestens 50 mg/l bzw. mehr als 500 mg/l auf. Derart hohe Hydrogencarbonat-Anteile liegen insbesondere in den vorwiegend Na-Ca-hydogenkarbonatischen-Cl Wässern insbesondere aus dem oberen Jura des bayrischen Molassebeckens vor. Die dort eingesetzten Tiefpumpen sind einem besonders hohen Verschleiß auch aufgrund von Ablagerungen ausgesetzt, weshalb die Verhinderung solcher Ablagerungen durch Rückführung eines Teils des abgekühlten Formationsfluids in die Förderbohrung mit einer besonders ausgeprägten Verminderung der Störanfälligkeit verbunden ist.

Gemäß einer bevorzugten Ausführungsform der vorliegenden Erfindung wird zumindest ein Anteil des rückgeführten Teils des abgekühlten Formationsfluids mit dem zu fördernden, heißen Formationsfluid vermischt. Neben der thermischen Belastung der Förderpumpen stellt die Bildung von Ablagerungen in der Förderpumpe eine besonders schwerwiegendes Hinderniss für einen konstanten Langzeitbetrieb der Pumpen dar. Das geförderte Tiefenwasser weist in der Regel aggressive und/oder verschleißfördernde (abrasive) Bestandteile in gelöster Form (z. B. als Salze oder Gase) und in Teilchenform (Mineralien, Trüben) auf, welche Einfluss auf die Betriebsdauer der Pumpe und die Häufigkeit ihrer Abschaltung zu Wartungszwecken haben. Insbesondere beim Fördern von heißen (> 100°C), vorwiegend Na-Ca-hydogenkarbonatischen-Cl Thermalwässern aus Tiefbohrungen bis zu 5.000 m Tiefe können Ablagerungen verschiedener Mineralspezies in Anlageneinrichtungen und insbesondere in den Tiefpumpen erfolgen.

Durch das Mischen zumindest eines Anteils des rückgeführten Teils des abgekühlten Formationsfluids mit dem zu fördernden, heißen Formationsfluid kommt es zu einer Absenkung der Temperatur des zur Entnahme anstehenden Formationsfluids. Durch diese Temperaturabsenkung können verschiedene Arten von Scalings in den Förderleitungen, der Förderpumpe, der obertägigen Einrichtung zur Energiegewinnung usw. verringert werden. Unter "Scaling" wird allgemein das Auskristallisieren von schwerlöslichen Salzen wie insbesondere Calciumhydrogencarbonat, Calciumcarbonat, Calciumsulfat, Silikaten, Sulfiden und Magnesiumhydroxid verstanden. Darüber hinaus können durch die Temperaturabsenkung mögliche freie Gasanteile (u.a. CO₂) im Formationsfluid vor Eintritt in die Förderpumpe reduziert oder die Bildung von Gasanteilen in der Förderpumpe reduziert oder vermieden werden.

Für das Gleichgewicht zwischen dem in Wasser immer vorhandenen gut löslichen Calciumhydrogencarbonat und dem unlöslichen Calciumcarbonat lautet die Reaktionsgleichung

Ca²⁺ + 2 HCO₃⁻ ⇄ CaCO₃ ↓ + CO₂ ↑ + H₂O

Bei dieser hauptsächlich auftretenden und insbesondere schädlichen Ablagerung von Calciumcarbonat handelt es sich um eine exotherme Reaktion. Mit steigender Temperatur oder/und fallendem Druck nimmt in solchen Fällen die Löslichkeitskonstante ab, was wiederum dazu führt, dass mit steigender Temperatur und/oder fallendem Druck steigende Mengen an Kalk abgelagert werden. Diesen Effekt nutzt das erfindungsgemäße Verfahren aus, da es aufgrund der durch die Rückführung eines Teils des abgekühlten Formationsfluids in die Förderbohrung zu einer Absenkung der Temperatur des geförderten Formationsfluids kommt, wodurch sich das Ausmaß der Entstehung von Scalings, insbesondere karbonatischen Ablagerungen in der Förderpumpe und anderen Anlagenteilen verringert.

Neben der Verringerung von Ablagerungen werden zudem die einzelnen Komponenten der geothermischen Anlage und insbesondere der Förderpumpe mit einem Medium geringerer Temperatur beaufschlagt, was wiederum zu einer Verminderung von Verschleißerscheinungen und zu einer Verlängerung der Lebensdauer der einzelnen Komponenten führt.

Der rückgeführte Teil des abgekühlten Formationsfluids kann also zu zwei verschiedenen Zwecken genutzt werden. Zum einen wird die Förderpumpe und insbesondere deren Motorsegment gekühlt, zum anderen wird die Temperatur des zur Förderung anstehenden Formationsfluids verringert, wodurch die Bildung von Ablagerungen in den Anlagenteilen vermindert wird. Zur erfindungsgemäß vorgesehenen Kühlung der Förderpumpe kann der gesamte rückgeführte Teil des abgekühlten Formationsfluids oder auch nur ein Anteil dieses rückgeführten Teils verwendet werden.

Dem Fachmann ist klar, dass die gewünschte Verwendung des rückgeführten abgekühlten Formationsfluids als Kühlfluid für die Förderpumpe von der Menge an durch den Kühlmantel der Förderpumpe geleiteten Formationsfluid und von dessen Temperatur abhängt. Innerhalb gewisser Grenzen kann zur Kühlung der Förderpumpe mit sinkender Temperatur des Kühlfluids eine abnehmende Menge an Kühlfluid verwendet werden. Wird also der rückgeführte Teil des abgekühlten Formationsfluids direkt in den Kühlmantel der Förderpumpe geleitet und im Wesentlichen vollständig zur Kühlung der Pumpe eingesetzt, so genügt eine geringere Menge an rückgeführtem Formationsfluid und/oder eine in gewissen Grenzen höhere Temperatur dieses Fluids.

Der Ausdruck "in gewissen Grenzen" verdeutlicht die triviale Tatsache, dass die Temperatur eines Kühlmediums immer unterhalb der Betriebstemperatur des zu kühlenden Elements liegen muss, da ansonsten kein Kühleffekt eintritt.

Das rückgeführte Formationsfluid kann aber auch vor seinem Eintritt in den Kühlmantel mit dem zur Förderung anstehenden, heißen Formationsfluid vermischt werden. In diesem Fall kann das rückgeführte Formationsfluid eine tiefere Temperatur aufweisen oder es kann eine größere Menge an abgekühltem Formationsfluid rückgeführt werden.

Bevorzugt erfolgt vor Rückführung des abgekühlten Formationsfluids in die Förderbohrung eine Zugabe von CO₂ zu dem zur Rückführung vorgesehenen, abgekühlten Formationsfluid. Wie aus der oben angegebenen Reaktionsgleichung für das Gleichgewicht zwischen Calciumhydrogencarbonat und dem unlöslichen Calciumcarbonat hervorgeht, wird das Gleichgewicht durch Zugabe von Kohlendioxid auf die Seite des Calciumhydrogencarbonats gedrängt, wodurch es zu einer weiteren Verringerung von Ablagerungen in der Tauchpumpe und den anderen Komponenten der Geothermieanlage kommt.

Die obertägige CO₂-Zugabe (Menge, Druckbedingungen und Einbringungsart) in das abgekühlte Formationsfluid erfolgt mit Hilfe eines Mischers und einer CO₂-Mengenbegrenzung derart, dass eine vollständige Auflösung des beigemischten CO₂ bereits obertägig im abgekühlten Formationsfluid erreicht wird. Die Menge an zugegebenem CO₂ in das abgekühlte Formationsfluid beträgt je nach Formationsfluid und geplanter Scalingminderung von 0,001 g_{CO2} / l_{Formationsfluid} bis zu 4 g_{CO2} / l_{Formationsfluid}, bevorzugt von 0,01 g_{CO2} / l_{Formationsfluid} bis zu 2 g_{CO2} / l_{Formationsfluid.}

Die max. mögliche Zugabemenge ist von den physikalisch-chemischen Eigenschaften des jeweiligen Formationsfluides abhängig und wird spezifisch für das abgekühlte Formationsfluid wie für die zu fördernde Formationsfluidmischung mit einer detaillierten hydrochemischen Modellierung unter Berücksichtigung der jeweiligen thermodynamischen Zustandsbedingungen vorab bestimmt. Hierdurch wird eine mögliche Überdosierung und ungewünschte Gasbildung sicher vermieden.

Gemäß einer bevorzugten Ausführungsform der vorliegenden Erfindung wird ein Anteil von 2% bis 20%, bevorzugt 3% bis 15%, der Gesamtmenge des abgekühlten Formationsfluids in die Förderbohrung rückgeführt. Untersuchungen haben gezeigt, dass bereits durch eine dauerhafte relativ geringe Abkühlung des zur Förderung anstehenden, heißen Formationsfluids um nur 2 K bis 10 K das Ausmaß an Ablagerungen in den einzelnen Bestandteilen der Anlage und insbesondere in der Förderpumpe deutlich verringert wird.

Die vorliegende Erfindung umfasst auch eine Anlage zur Energiegewinnung aus geothermischer Energie aufweisend
- eine in einer Förderbohrung angeordnete Förderpumpe zum Fördern eines heißen Formationsfluids, wobei die Förderpumpe ein Pumpensegment, ein Motorsegment und einen Kühlmantel aufweist, wobei der Kühlmantel zumindest in Teilbereichen mit dem Motorsegment in thermischen Kontakt steht und der Kühlmantel eine Kühlfluideintrittsöffnung zur Aufnahme eines Kühlfluids und eine Kühlfluidaustrittsöffnung zur Abgabe des Kühlfluids aufweist,
- eine obertägige Einrichtung zur Energiegewinnung unter Abkühlung des heißen Formationsfluids und Bildung eines abgekühlten Formationsfluids,
- eine die Förderpumpe mit der Einrichtung zur Energiegewinnung verbindende Förderrohrleitung,
- eine zumindest abschnittsweise thermisch isolierte Rückführrohrleitung zur Rückführung eines Teils des abgekühlten Formationsfluids in die Förderbohrung, wobei die Austrittsöffnung der Rückführrohrleitung eine im Bereich der Kühlfluideintrittsöffnung des Kühlmantels der Förderpumpe angeordnete Formationsfluidaustrittsöffnung für den Austritt des rückgeführten abgekühlten Formationsfluids bildet.

Die mit der erfindungsgemäßen Anlage zur Energiegewinnung aus geothermischer Energie verbundenen Vorteile wurden im Zusammenhang mit dem erfindungsgemäßen Verfahren bereits diskutiert. Die dort angegebenen Vorteile und Besonderheiten treffen auf die Anlage zur Energiegewinnung aus geothermischer Energie in analoger Weise zu.

Der zumindest in Teilbereichen mit dem Motorsegment der Förderpumpe in Kontakt stehende Kühlmantel kann nach außen mit einer thermischen Isolierung ausgestattet sein oder nicht isoliert verwendet werden.

Bevorzugt ist das untere Ende der Rückführrohrleitung mit einem Mischer verbunden. Die Menge an aus dem unteren Ende der Rückführrohrleitung austretendem und in den Mischer eintretendem, abgekühlten Formationsfluid wird durch die mit definiertem Durchmesser und Geometrie ausgebildete Eintrittsöffnung des Mischers reguliert. In dieser Ausführungsform entspricht die Formationsfluidaustrittsöffnung also der Kühlfluideintrittsöffnung.

Bevorzugt weist der Mischer eine Mischerblende auf, mit deren Hilfe die Menge an dem Mischer zugeführtem heißen Formationsfluid geregelt werden kann.

Wie bereits ausgeführt kann das rückgeführte Formationsfluid vor seinem Eintritt in den Kühlmantel mit dem zur Förderung anstehenden, heißen Formationsfluid vermischt werden. In diesem Fall kann das rückgeführte Formationsfluid eine tiefere Temperatur aufweisen und es kann eine definierte Menge an abgekühltem Formationsfluid rückgeführt werden. Ein solches Mischen mit dem zur Förderung anstehenden, heißen Formationsfluid kann in vorteilhafter Weise durch den Einsatz eines Mischers erfolgen, wodurch eine besonders gute und homogene Vermischung des rückgeführten Stroms an abgekühltem Formationsfluid mit dem zur Förderung anstehenden heißen Formationsfluid erreicht wird. Dem Kühlmantel der Förderpumpe wird in diesem Fall Formationsfluid mit relativ konstanter Temperatur zugeführt, was zu einer weiteren Verringerung der thermischen Beanspruchung der Pumpe und zu einer längeren Lebensdauer führt.

Der Mischer wird so betrieben, dass das rückgeführte Formationsfluid vor seinem Eintritt in den Kühlmantel mit einem Teil des zur Förderung anstehenden, heißen Formationsfluid vermischt wird. Zur Einstellung der gewünschten Kühlmanteldurchflusstemperatur sind im Mischer definierte Eintrittsbohrungen für das heiße Formationsfluid und das abgekühlte rückgeführte Formationsfluid angeordnet. Durch den Anteil an heißem Formationsfluid, das dem regelbaren rückgeführten, abgekühltem Formationsfluid beigemischt wird, kann die Temperatur des in die Kühlfluideintrittsöffnung des Kühlmantels eintretenden Fluids geregelt werden. Auf diese Weise kann problemlos ein Kühlfluid mit einer für die Kühlung der Förderpumpe optimalen Temperatur bereitgestellt werden. Der Anteil an zur Förderung anstehendem, heißen Formationsfluid, der nicht im Mischer mit dem rückgeführten, abgekülten Formationsfluid vermischt wird, wird an dem Mischer und dem Motorsegment der Förderpumpe mit Hilfe eines definierte freien Öffnungsquerschnittes zwischen Mischer und Casing vorbeigeführt und gelangt so in den Ansaugbereich des Pumpensegements der Förderpumpe. Wie nachfolgend noch näher erläutert, wird dieser Anteil des zur Förderung anstehenden, heißen Formationsfluids im Ansaugbereich des Pumpensegements mit dem aus der Kühlfluidaustrittsöffnung des Kühlmantels austretendem Formationsfluid vermischt.

Die Rückführrohrleitung zur Rückführung eines Teils des abgekühlten Formationsfluids in die Förderbohrung kann zumindest abschnittsweise innerhalb der Förderrohrleitung angeordnet sein (sogenannte dual concentric Konfiguration) oder sie kann zumindest abschnittsweise im Wesentlichen parallel zur Förderrohrleitung und außerhalb der Förderrohrleitung verlaufen (parallel configuration). Die gewählte Anordnung der Rückführrohrleitung hängt von den Platzverhältnissen im Bohrloch und im Bereich des obertägigen Endes des Förderbohrlochs (wellhead) ab.

Die Tiefbohrungen und insbesondere Förderbohrungen sind aufgrund ihrer Bauweisen bis zum eigentlichen Reservoir an Formationsfluid mit sogenannten Casings ausgekleidet. Durch solche Casings wird der Eintritt von Fremdfluid verhindert. Im Bereich von der Erdoberfläche bis zu ca 1.000 m Tiefe weisen die Casings je nach Bauausführung in der Regel einen Rohraußendurchmesser von 33,97 cm (13.3/8") bis zu 50,8 cm (20") auf. In größerer Tiefe wird in der Regel ein Verrohrrungsdurchmesser von 33,97 cm (13.3/8") oder weniger gewählt.

Gemäß einer bevorzugten Ausführungsformel der vorliegenden Erfindung wird eine zumindest abschnittsweise thermisch hoch isolierte Rückführrohrleitung eingesetzt. Besonders bevorzugt wird eine durch ein Vakuum zumindest abschnittsweise isolierte Rückführrohrleitung verwendet. Die Rückführrohrleitung kann selbstverständlich über ihre gesamte Länge thermisch isoliert ausgebildet sein.

Bevorzugt ist die Kühlfluidaustrittsöffnung des Kühlmantels der Förderpumpe in einem Ansaugbereich des Pumpensegements der Förderpumpe angeordnet. Auch nach seiner Verwendung als Kühlfluid für das Motorsegment der Förderpumpe weist das aus der Kühlfluidaustrittsöffnung des Kühlmantels austretende Formationsfluid eine niedrigere Temperatur auf als das heiße, zur Förderung anstehende Formationsfluid. Ist nun die Kühlfluidaustrittsöffnung des Kühlmantels der Förderpumpe im Ansaugbereich des Pumpensegements der Förderpumpe angeordnet, so wird Formationsfluid mit einer leicht erniedrigten Temperatur gefördert, was zu einer Verringerung der Bildung von Ablagerungen in Anlagenteilen und zu einer verminderten thermischen Beanspruchung der Anlagenteile führt. Die damit verbundenen Vorteile wurden im Zusammenhang mit dem Verfahren gemäß der vorliegenden Erfindung bereits ausführlich beschrieben.

Grundsätzlich kann die Abkühlung des Formationsfluids auf eine gewünschte Temperatur durch verschiedene Maßnahmen geregelt werden. Eine direkte Auswirkung auf die Temperatur des zur Förderung anstehenden Formationsfluids hat die Temperatur des rückgeführten Formationsfluids, wobei eine geringere Temperatur des rückgeführten Formationsfluids zu einer niedrigeren Temperatur des Gemisches aus zur Förderung anstehendem Formationsfluid und rückgeführtem Formationsfluid führt. Analog kann die Mischtemperatur durch die Menge an rückgeführtem Formationsfluid in einfacher Weise geregelt werden. Die dazu erforderliche Regelung des Volumenstroms an rückgeführtem Formationsfluid erfolgt mit Hilfe entsprechender obertägiger Durchflussregler (Durchflussmesser, Förderpumpe soweit erforderlich, Regelventil) . Der obertägige Betriebsdruckbereich für das rückgeführte Formationsfluid liegt je nach Erfordernissen zwischen Atmosphärendruck bis zu mehr als 25 bar.

Daneben kann die gewünschte Kühlmanteldurchflusstemperatur im Mischer (unterhalb des Kühlmantels) mit Hilfe des regelbaren abgekühlten rückgeführten Formationsfluids und den definierten Eintrittsbohrungen für das anteilige heiße Formationsfluid und dem kalten rückgeführten Formationsfluid sowie des definierten freien Öffnungsquerschnittes zwischen Mischer und Casing (Mischerblende, Mischerbypassformationsfluss) geregelt werden.

Besonders bevorzugt ist die Kühlfluidaustrittsöffnung im Mischer unterhalbe des Kühlmantels der Förderpumpe in vertikaler Richtung unterhalb des Pumpensegements der Förderpumpe angeordnet. In diesem Fall liegt das Pumpensegment in Strömungsrichtung des aus der Kühlfluidaustrittsöffnung austretenden Fluids und kann daher in vorteilhafter Weise von dem Pumpensegement angesaugt werden. Dieser Effekt wird noch verstärkt, wenn das Motorsegment der Förderpumpe in vertikaler Richtung unterhalb des Pumpensegements der Förderpumpe angeordnet ist. Die Kühlfluidaustrittsöffnung im Mischer kann sich in bis zu 50 m Entfernung unterhalb des Pumpensegements der Förderpumpe befinden.

Bevorzugt weist die Anlage eine Kohlendioxidzuführrohrleitung auf, wobei durch die Kohlendioxidzuführrohrleitung vor Rückführung des abgekühlten Formationsfluids in die Förderbohrung eine Zugabe von CO₂ zu dem zur Rückführung vorgesehenen, abgekühlten Formationsfluid erfolgt. Wie aus der oben angegebenen Reaktionsgleichung für das Gleichgewicht zwischen Calciumhydrogencarbonat und dem unlöslichen Calciumcarbonat hervorgeht, wird das Gleichgewicht durch Zugabe von Kohlendioxid auf die Seite des Calciumhydrogencarbonats gedrängt, wodurch es zu einer weiteren Verringerung von Ablagerungen in der Tauchpumpe und den anderen Komponenten der Geothermieanlage kommt.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung.

### Wege zur Ausführung der Erfindung

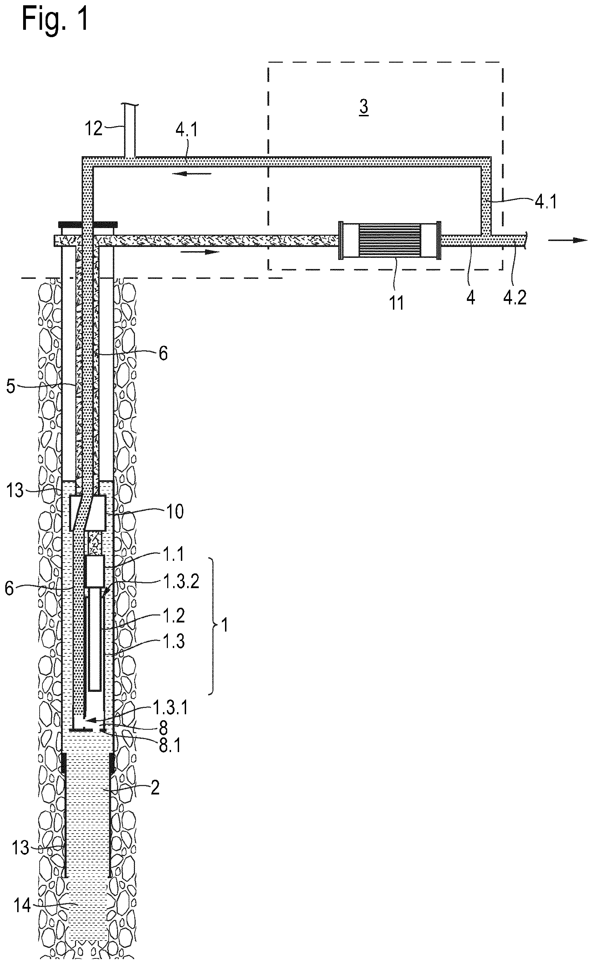

Die Erfindung soll nachfolgend anhand von Ausführungsbeispielen im Zusammenhang mit der Figur näher erläutert werden. Die Figur 1 zeigt eine schematische Darstellung einer Ausführungsform einer Anlage zur Energiegewinnung aus geothermischer Energie gemäß der vorliegenden Erfindung.

In der mit einem Casing 13 ausgestatteten Förderbohrung ist eine Förderpumpe 1 zum Fördern des heißen Formationsfluids 2 angeordnet. In dem gezeigten Ausführungsbeispiel ist der tiefste Bereich 14 der Förderbohrung nicht mit einem Casing ausgestattet, da dieser Bereich zum Gebirge durchlässig sein muss. Das heiße Formationsfluid 2 wird von der Förderpumpe 1 durch die Förderrohrleitung 5 zu der obertägig installierten Einrichtung zur Energiegewinnung 3 gepumpt. Dort wird dem heißen Formationsfluid 2 in einem Wärmetauscher 11 Wärmeenergie entzogen und auf ein Arbeitsfluid (nicht dargestellt) übertragen, welches nachfolgend zur Gewinnung von elektrischer Energie eingesetzt wird. Durch den Entzug von Wärmeenergie kühlt das Formationsfluid ab. Der Strom des abgekühlten Formationsfluids ist mit dem Bezugszeichen 4 gekennzeichnet.

Der größere Teil 4.2 des abgekühlten Formationsfluids wird zu einer von der Förderbohrung beabstandeten Reinjektionsbohrung geleitet und dort in die das Formationsfluid führenden Gesteinsschichten rückinjeziert. Der kleinere Teil 4.1 des abgekühlten Formationsfluids wird durch eine thermisch isolierte Rückführrohrleitung 6 zu einem in vertikaler Richtung unterhalb der Förderpumpe 1 angeordneten Mischer 8 zurückgeführt.

Mit dem Bezugszeichen 12 ist eine Kohlendioxidzuführrohrleitung bezeichnet, durch die vor Rückführung des abgekühlten Formationsfluids in die Förderbohrung eine Zugabe von CO₂ zu dem zur Rückführung vorgesehenen, abgekühlten Formationsfluid erfolgt.

Typische Außendurchmesser der Förderleitung 5 sind 19,37 cm (7 5/8"), 21,91 cm (8 5/8"), 24,45 cm (9 5/8") oder 27,31 cm (10 3/4"). Typische Außendurchmesser einer vakuumisolierten Rückführrohrleitung 6 sind 3,81 cm (1 1/2") oder 5,08 cm (2") oder 7,30 cm (2 7/8") oder 8,89 cm (3 1/2").

Mit dem Bezugszeichen 10 sind Rohradapter gekennzeichnet, die für einen dichten Übergang von Rohren verschiedener Durchmesser und Anordnungen der Rohrleitungen (parallel, dual concentric) sorgen.

Im gezeigten Ausführungsbeispiel ist die thermisch isolierte Rückführrohrleitung 6 im Bereich oberhalb des Rohradapters 10 innerhalb der Förderleitung 5 angeordnet (dual concentric Konfiguration). Im Bereich unter des Rohradapters 10 verläuft die Rückführrohrleitung 6 als Bypassleitung parallel zur Förderpumpe 1. Die Rückführrohrleitung 6 kann in dem Bereich, in dem sie parallel zur Förderpumpe 1 verläuft einen geringeren Durchmesser aufweisen als im Bereich innerhalb der Förderleitung 5. Die Rückführrohrleitung 6 kann in dem Bereich, in dem sie parallel zur Förderpumpe 1 verläuft auch nur gering isoliert oder nicht isoliert sein und einen Außendurchmesser kleiner 7,30 cm (2 7/8") aufweisen.

Das Motorsegment 1.2 der Förderpumpe 1 ist in vertikaler Richtung unterhalb des Pumpensegements 1.1 der Förderpumpe 1 angeordnet. Dabei ist die Kühlfluidaustrittsöffnung 1.3.2 des Kühlmantels 1.3 der Förderpumpe 1 ebenfalls in vertikaler Richtung unterhalb des Pumpensegements 1.1 der Förderpumpe 1 angeordnet. Das Pumpensegment 1.1 liegt somit direkt in Strömungsrichtung des aus der Kühlfluidaustrittsöffnung 1.3.2 austretenden Fluids, welches von dem Pumpensegement 1.1 angesaugt und in die Förderrohrleitung 5 gepumpt wird.

Wie bereits ausgeführt wird ein kleinerer Teil 4.1 des abgekühlten Formationsfluids durch eine thermisch isolierte Rückführrohrleitung 6 zu dem Mischer 8 zurückgeführt.
Der Mischer 8 wird so betrieben, dass das rückgeführte Formationsfluid 4.1 vor seinem Eintritt in den Kühlmantel 1.3 des Motorsegments 1.2 der Förderpumpe 1 mit einem Teil des zur Förderung anstehenden, heißen Formationsfluid 2 vermischt wird. Die Aufteilung des heißen Formationsfluids 2, das in den Mischer 8 und den Kühlmantel 1.3 eintritt bzw. das am Mischer 8 vorbeifließt, erfolgt mit Hilfe der Mischerblende 8.1. Durch den Anteil an heißem Formationsfluid 2, das dem rückgeführten, abgekühlten Formationsfluid 4.1 beigemischt wird, wird die Temperatur des über die Kühlfluideintrittsöffnung 1.3.1 in den Kühlmantel 1.3 eintretenden Fluids auf eine für die Kühlung der Förderpumpe 1 optimale Temperatur geregelt. Durch die Kühlung des Motorsegements kann die Betriebstemperatur des Motors der Förderpumpe um mehr als 10 K bis zu 50 K abgesenkt werden.

Der Anteil an zur Förderung anstehendem, heißen Formationsfluid 2, der nicht im Mischer 8 mit dem rückgeführten, abgekühlten Formationsfluid 4.1 vermischt wird, wird an dem Mischer 8, der Mischerblende 8.1 und an dem Motorsegment 1.3 der Förderpumpe 1 vorbeigeführt und gelangt so in den Ansaugbereich des Pumpensegements 1.1 der Förderpumpe 1. Dieser Anteil des zur Förderung anstehenden, heißen Formationsfluids 2 wird im Ansaugbereich des Pumpensegements 1.1 mit dem aus der Kühlfluidaustrittsöffnung 1.3.2 des Kühlmantels 1.3 austretenden Formationsfluid vermischt, wodurch die Temperatur des zur Förderung anstehenden heißen Formationsfluids abgesenkt wird. In Folge der Temperaturabsenkung kommt es zu einer Verringerung der Ausbildung von Ablagerungen in den einzelnen Anlagenteilen und insbesondere in der Förderpumpe 1, was wiederum zu einer längeren Lebensdauer und einem verringerten Wartungsaufwand führt.

### Bezugszeichenliste

- 1: Förderpumpe
- 1.1: Pumpensegment
- 1.2: Motorsegment
- 1.3: Kühlmantel
- 1.3.1: Kühlfluideintrittsöffnung
- 1.3.2: Kühlfluidaustrittsöffnung
- 2: Formationsfluid
- 3: obertägige Einrichtung zur Energiegewinnung
- 4: abgekühltes Formationsfluid
- 4.1: zur Rückführung in die Förderbohrung vorgesehenes, abgekühltes Formationsfluid
- 4.2: zur Reinjektion in das unterirdische Reservoir vorgesehenes, abgekühltes Formationsfluid
- 5: Förderrohrleitung
- 6: Rückführrohrleitung
- 8: Mischer
- 8.1: Mischerblende
- 10: Rohradapter
- 11: Wärmetauscher
- 12: Kohlendioxidzuführrohrleitung
- 13: Casing
- 14: Förderbohrungsbereich ohne Casing

## Patentansprüche

1. Verfahren zur Energiegewinnung aus geothermischer Energie umfassend die Schritte
- Fördern eines heißen Formationsfluids (2) aus einer Förderbohrung durch eine Förderrohrleitung (5) unter Verwendung einer Förderpumpe (1), wobei die Förderpumpe (1) ein Pumpensegment (1.1), ein Motorsegment (1.2) und einen Kühlmantel (1.3) aufweist, wobei der Kühlmantel (1.3) zumindest in Teilbereichen mit dem Motorsegment (1.2) in thermischen Kontakt steht und der Kühlmantel (1.3) eine Kühlfluideintrittsöffnung (1.3.1) zur Aufnahme eines Kühlfluids und eine Kühlfluidaustrittsöffnung (1.3.2) zur Abgabe des Kühlfluids aufweist,
- Durchleiten des heißen Formationsfluids (2) durch eine obertägige Einrichtung zur Energiegewinnung (3) unter Abkühlung des heißen Formationsfluids (2) und Bildung eines abgekühlten Formationsfluids (4),
- Rückführung eines Teils (4.1) des abgekühlten Formationsfluids (4) in die Förderbohrung durch eine zumindest abschnittsweise thermisch isolierte Rückführrohrleitung (6), wobei die Austrittsöffnung der Rückführrohrleitung (6) eine im Bereich der Kühlfluideintrittsöffnung (1.3.1) des Kühlmantels (1.3) der Förderpumpe (1) angeordnete Formationsfluidaustrittsöffnung für den Austritt des rückgeführten abgekühlten Formationsfluids (4.1) bildet,
- Durchleiten zumindest eines Anteils des rückgeführten Teils (4.1) des abgekühlten Formationsfluids durch den Kühlmantel (1.3) der Förderpumpe (1).

2. Verfahren nach Anspruch 1, **dadurch gekennzeichnet, dass** das heiße Formationsfluid (2) eine Temperatur von wenigstens 100°C, bevorzugt von wenigstens 110°C aufweist.

3. Verfahren nach einem der Ansprüche 1 oder 2, **dadurch gekennzeichnet, dass** zumindest ein Anteil des rückgeführten Teils (4.1) des abgekühlten Formationsfluids (4) mit dem zu fördernden, heißen Formationsfluid (2) vermischt wird.

4. Verfahren nach einem der Ansprüche 1 bis 3, **dadurch gekennzeichnet, dass** das heiße Formationsfluid (2) einen Anteil an Hydrogencarbonat von mehr als 50 mg/l oder einen Anteil an gelöstem Kohlendioxid von mehr als 50 ppmV aufweist.

5. Verfahren nach einem der Ansprüche 1 bis 4, **dadurch gekennzeichnet, dass** vor Rückführung des abgekühlten Formationsfluids (4.1) in die Förderbohrung eine Zugabe von CO₂ zu dem zur Rückführung vorgesehenen, abgekühlten Formationsfluid (4.1) erfolgt.

6. Verfahren nach Anspruch 5, **dadurch gekennzeichnet, dass** eine Menge von 0,001 g_{CO2} / l_{Formationsfluid} bis zu 4 g_{CO2} / l_{Formationsfluid}, bevorzugt von 0,01 g_{CO2} / l_{Formationsfluid} bis zu 2 g_{CO2} / l_{Formationsfluid} zu dem zur Rückführung vorgesehenen, abgekühlten Formationsfluid (4.1) zugegeben wird.

7. Verfahren nach einem der Ansprüche 1 bis 6, **dadurch gekennzeichnet, dass** ein Anteil (4.1) von 2% bis 20%, bevorzugt 3% bis 15%, der Gesamtmenge an abgekühlten Formationsfluid (4) in die Förderbohrung rückgeführt wird.

8. Anlage zur Energiegewinnung aus geothermischer Energie aufweisend
- eine in einer Förderbohrung angeordnete Förderpumpe (1) zum Fördern eines heißen Formationsfluids (2), wobei die Förderpumpe (1) ein Pumpensegment (1.1), ein Motorsegment (1.2) und einen Kühlmantel (1.3) aufweist, wobei der Kühlmantel (1.3) zumindest in Teilbereichen mit dem Motorsegment (1.2) in thermischen Kontakt steht und der Kühlmantel (1.3) eine Kühlfluideintrittsöffnung (1.3.1) zur Aufnahme eines Kühlfluids und eine Kühlfluidaustrittsöffnung (1.3.2) zur Abgabe des Kühlfluids aufweist,
- eine obertägige Einrichtung zur Energiegewinnung (3) unter Abkühlung des heißen Formationsfluids (2) und Bildung eines abgekühlten Formationsfluids (4),
- eine die Förderpumpe (1) mit der Einrichtung zur Energiegewinnung (3) verbindende Förderrohrleitung (5),
- eine zumindest abschnittsweise thermisch isolierte Rückführrohrleitung (6) zur Rückführung eines Teils (4.1) des abgekühlten Formationsfluids (4) in die Förderbohrung, wobei die Austrittsöffnung der Rückführrohrleitung (6) eine im Bereich der Kühlfluideintrittsöffnung (1.3.1) des Kühlmantels (1.3) der Förderpumpe (1) angeordnete Formationsfluidaustrittsöffnung für den Austritt des rückgeführten abgekühlten Formationsfluids (4.1) bildet.

9. Anlage nach Anspruch 8, **dadurch gekennzeichnet, dass** ein Mischer (8) vorgesehen ist, wobei die Kühlfluideintrittsöffnung (1.3.1) im Mischer (8) angeordnet ist und wobei das untere Ende der Rückführrohrleitung (6) mit dem Mischer (8) verbunden ist und die Formationsfluidaustrittsöffnung durch die Kühlfluideintrittsöffnung (1.3.1) gebildet ist.

10. Anlage nach Anspruch 8 oder 9, **dadurch gekennzeichnet, dass** eine Mischerblende (8.1) zur Regelung der Menge an dem Mischer (8) zugeführten heißen Formationsfluid vorgesehen ist.

11. Anlage nach einem der Ansprüche 8 bis 10, **dadurch gekennzeichnet, dass** zumindest ein Teil der Rückführrohrleitung (6) innerhalb der Förderrohrleitung (5) angeordnet ist und/oder die Rückführrohrleitung (6) zumindest abschnittsweise im Wesentlichen parallel zur Förderrohrleitung (5) und außerhalb der Förderrohrleitung (5) verläuft.

12. Anlage nach einem der Ansprüche 8 bis 11, **dadurch gekennzeichnet, dass** es sich um eine zumindest abschnittsweise thermisch hoch isolierte Rückführrohrleitung (6), bevorzugt um eine zumindest abschnittsweise vakuumisolierte Rückführrohrleitung handelt.

13. Anlage nach einem der Ansprüche 8 bis 12, **dadurch gekennzeichnet, dass** die Kühlfluidaustrittsöffnung (1.3.2) in einem Ansaugbereich des Pumpensegements (1.1) der Förderpumpe (1) angeordnet ist.

14. Anlage nach einem der Ansprüche 8 bis 13, **dadurch gekennzeichnet, dass** die Kühlfluidaustrittsöffnung (1.3.2) in vertikaler Richtung unterhalb des Pumpensegements (1.1) der Förderpumpe (1) angeordnet ist.

15. Anlage nach einem der Ansprüche 8 bis 14, **dadurch gekennzeichnet, dass** eine Kohlendioxidzuführrohrleitung (12) vorgesehen ist, wobei durch die Kohlendioxidzuführrohrleitung (12) vor Rückführung des abgekühlten Formationsfluids (4.1) in die Förderbohrung eine Zugabe von CO₂ zu dem zur Rückführung vorgesehenen, abgekühlten Formationsfluid (4.1) erfolgt.

## Claims

1. A method for generating energy from geothermal energy, comprising the following steps:
- conveying a hot formation fluid (2) from a production well by a conveying pipeline (5) with use of a feed pump (1), wherein the feed pump (1) has a pump segment (1.1), a motor segment (1.2), and a cooling jacket (1.3), wherein the cooling jacket (1.3) is in thermal contact at least in regions with the motor segment (1.2) and the cooling jacket (1.3) has a cooling fluid entry opening (1.3.1) for receiving a cooling fluid and a cooling fluid outlet opening (1.3.2) for discharging the cooling fluid,
- passing the hot formation fluid (2) through a means for generating energy (3) arranged above ground, while cooling the hot formation fluid (2) and creating a cooled formation fluid (4),
- returning part (4.1) of the cooled formation fluid (4) into the production well by a return pipeline (6) that is thermally insulated at least in part, wherein the outlet opening of the return pipeline (6) forms a formation fluid outlet opening arranged in the region of the cooling fluid entry opening (1.3.1) of the cooling jacket (1.3) of the feed pump (1) for the discharge of the returned cooled formation fluid (4.1),
- passing at least a proportion of the returned part (4.1) of the cooled formation fluid through the cooling jacket (1.3) of the feed pump (1).

2. The method according to claim 1, **characterised in that** the hot formation fluid (2) has a temperature of at least 100°C, preferably of at least 110°C.

3. The method according to either one of claims 1 or 2, **characterised in that** at least a proportion of the returned part (4.1) of the cooled formation fluid (4) is mixed with the hot formation fluid (2) that is to be conveyed.

4. The method according to any one of claims 1 to 3, **characterised in that** the hot formation fluid (2) has a proportion of hydrogen carbonate of more than 50 mg/l or a proportion of dissolved carbon dioxide of more than 50 ppmV.

5. The method according to any one of claims 1 to 4, **characterised in that**, before the cooled formation fluid (4.1) is returned into the production well, CO₂ is added to the cooled formation fluid (4.1) intended to be returned.

6. The method according to claim 5, **characterised in that** an amount of from 0.001 g_{co2}/l_{formation fluid} to 4 g_{co2}/l_{formation fluid}, preferably from 0.01 g_{co2}/l_{formation fluid} to 2 g_{co2}/l_{formation fluid} is added to the cooled formation fluid (4.1) intended to be returned.

7. The method according to any one of claims 1 to 6, **characterised in that** a proportion (4.1) of from 2% to 20%, preferably 3% to 15%, of the total amount of cooled formation fluid (4) is returned into the production well.

8. A plant for generating energy from geothermal energy comprising
- a feed pump (1) arranged in a production well for conveying a hot formation fluid (2), wherein the feed pump (1) has a pump segment (1.1), a motor segment (1.2) and a cooling jacket (1.3), wherein the cooling jacket (1.3) is in thermal contact at least in regions with the motor segment (1.2) and the cooling jacket (1.3) has a cooling fluid entry opening (1.3.1) for receiving a cooling fluid and a cooling fluid outlet opening (1.3.2) for delivering the cooling fluid,
- a means for generating energy (3) arranged above ground, while cooling the hot formation fluid (2) and creating a cooled formation fluid (4),
- a conveying pipeline (5) connecting the feed pump (1) to the means for generating energy (3),
- a return pipeline (6) that is thermally insulated at least in part for returning part (4.1) of the cooled formation fluid (4) into the production well, wherein the outlet opening of the return pipeline (6) forms a formation fluid outlet opening arranged in the region of the cooling fluid entry opening (1.3.1) of the cooling jacket (1.3) of the feed pump (1) for the discharge of the returned cooled formation fluid (4.1).

9. The plant according to claim 8, **characterised in that** a mixer (8) is provided, wherein the cooling fluid entry opening (1.3.1) is arranged in the mixer (8), and wherein the lower end of the return pipeline (6) is connected to the mixer (8) and the formation fluid outlet opening is formed by the cooling fluid entry opening (1.3.1).

10. The plant according to claim 8 or 9, **characterised in that** a mixer orifice (8.1) for controlling the amount of hot formation fluid fed to the mixer (8) is provided.

11. The plant according to any one of claims 8 to 10, **characterised in that** at least part of the return pipeline (6) is arranged within the conveying pipeline (5) and/or the return pipeline (6) runs at least in portions substantially parallel to the conveying pipeline (5) and outside the conveying pipeline (5).

12. The plant according to any one of claims 8 to 11, **characterised in that** it is a return pipeline (6) highly thermally insulated at least in portions, preferably a return pipeline vacuum-insulated at least in portions.

13. The plant according to any one of claims 8 to 12, **characterised in that** the cooling fluid outlet opening (1.3.2) is arranged in an intake region of the pump segment (1.1) of the feed pump (1).

14. The plant according to any one of claims 8 to 13, **characterised in that** the cooling fluid outlet opening (1.3.2) is arranged in the vertical direction below the pump segment (1.1) of the feed pump (1).

15. The plant according to any one of claims 8 to 14, **characterised in that** a carbon dioxide feed pipeline (12) is provided, wherein the carbon dioxide feed pipeline (12) is used to add CO₂ to the cooled formation fluid (4.1) intended to be returned before the cooled formation fluid (4.1) is returned to the production well.

## Revendications

1. Procédé de production d'énergie à partir de l'énergie géothermique comprenant les étapes de :
- extraction d'un fluide de formation chaud (2) à partir d'un puits de production par un conduit de transport (5) en utilisant une pompe d'alimentation (1), la pompe d'alimentation (1) comportant un segment de pompe (1.1), un segment de moteur (1.2) et une enveloppe de refroidissement (1.3), l'enveloppe de refroidissement (1.3) étant au moins dans des parties de zone en contact thermique avec le segment de moteur (1.2) et l'enveloppe de refroidissement (1.3) comportant un orifice d'entrée de fluide de refroidissement (1.3.1) pour recevoir un fluide de refroidissement et un orifice de sortie de fluide de refroidissement (1.3.2) pour dégager le fluide de refroidissement,
- passage du fluide de formation chaud (2) à travers un dispositif de production d'énergie (3) en surface en refroidissant le fluide de formation chaud (2) et en formant un fluide de formation refroidi (4),
- recyclage d'une partie (4.1) du fluide de formation refroidi (4) dans le puits de production à travers un conduit de recirculation (6) au moins thermiquement isolée par tronçon, l'orifice de sortie du conduit de recirculation (6) formant un orifice de sortie de fluide de formation disposé dans la zone de l'orifice d'entrée de fluide de formation (1.3.1) de l'enveloppe de refroidissement (1.3) de la pompe d'alimentation (1) pour la sortie du fluide de formation recyclé refroidi (4.1),
- passage d'au moins une portion de la partie recyclée (4.1) du fluide de formation refroidi à travers l'enveloppe de refroidissement (1.3) de la pompe d'alimentation (1).

2. Procédé selon la revendication 1, **caractérisé en ce que** le fluide de formation chaud (2) comporte une température d'au moins 100° C, de préférence d'au moins 110° C.

3. Procédé selon l'une quelconque des revendications 1 ou 2, **caractérisé en ce qu'**au moins une portion de la partie recyclée (4.1) du fluide de formation refroidi (4) est mélangée au fluide de formation chaud à extraire (2).

4. Procédé selon l'une quelconque des revendications 1 à 3, **caractérisé en ce que** le fluide de formation chaud (2) comporte une portion de carbonate d'hydrogène de plus de 50 mg/l ou une portion d'anhydride carbonique dissous de plus de 50 ppmV.

5. Procédé selon l'une quelconque des revendications 1 à 4 **caractérisé en ce qu'**une addition de CO₂ au fluide de formation refroidi (4.1) prévu pour recyclage a lieu avant recyclage du fluide de formation refroidi (4.1) dans le puits de production.

6. Procédé selon la revendication 5, **caractérisé en ce qu'**une quantité de 0,001 g_{CO2}/l_{fluide de formation} à 4 g_{CO2}/l_{fluide de formation}, de préférence 0,01 g_{CO2}/l_{fluide de formation} à 2 g_{CO2}/l_{fluide de formation} est ajoutée au fluide de formation (4.1) refroidi prévu pour recyclage.

7. Procédé selon l'une quelconque des revendications 1 à 6, **caractérisé en ce qu'**une portion (4.1) de 2% à 20%, de préférence 3% à 15% de la quantité totale en liquide de formation (4) refroidi est recyclée dans le puits de production.

8. Installation pour la production d'énergie à partir de l'énergie géothermique comportant :
- une pompe d'alimentation (1) disposée dans un puits de production pour l'extraction d'un fluide de formation chaud (2), la pompe d'alimentation (1) comportant un segment de pompe (1.1), un segment de moteur (1.2) et une enveloppe de refroidissement (1.3), l'enveloppe de refroidissement (1.3) étant en contact thermique au moins dans des parties de zone avec le segment de moteur (1.2) et l'enveloppe de refroidissement (1.3) comportant un orifice d'entrée de fluide de refroidissement (1.3.1) pour recevoir un fluide de refroidissement et un orifice de sortie de fluide de refroidissement (1.3.2) pour dégager le fluide de refroidissement,
- un dispositif de production d'énergie (3) en surface en refroidissant le fluide de formation chaud (2) et en formant un fluide de formation refroidi (4),
- un conduit de transport (5) reliant la pompe d'alimentation (1) au dispositif de production d'énergie (3),
- un conduit de recyclage (6) thermiquement isolé au moins par tronçon pour le recyclage d'une partie (4.1) du fluide de formation refroidi (4) dans le puits de production, l'orifice de sortie du conduit de recyclage (6) formant un orifice de sortie de fluide de formation disposé dans la zone de l'orifice d'entrée de fluide de refroidissement (1.3.1) de l'enveloppe de refroidissement (1.3) de la pompe d'alimentation (1) pour la sortie du fluide de formation refroidi recyclé (4.1).

9. Installation selon la revendication 8, **caractérisé en ce qu'**un mélangeur (8) est prévu, l'orifice d'entrée de fluide de refroidissement (1.3.1) étant disposé dans le mélangeur (8) et l'extrémité inférieure du conduit de recyclage (6) étant relié au mélangeur (8) et l'orifice de sortie de fluide de formation étant formé par l'orifice d'entrée de fluide de refroidissement (1.3.1).

10. Installation selon la revendication 8 ou 9, **caractérisé en ce qu'**un diaphragme de mélangeur (8.1) est prévu pour la régulation de la quantité de fluide de formation chaud acheminée au mélangeur (8).

11. Installation selon l'une quelconque des revendications 8 à 10 **caractérisé en ce qu'**au moins une partie du conduit de recyclage (6) est disposée à l'intérieur du conduit de transport (5) et/ou le conduit de recyclage (6) passe au moins par tronçon pour l'essentiel parallèlement au conduit de transport (5) et à l'extérieur du conduit de transport (5).

12. Installation selon l'une quelconque des revendications 8 à 11, **caractérisé en ce qu'**il s'agit d'un conduit de recyclage (6) thermiquement fortement isolé au moins par tronçon, de préférence d'un conduit de recyclage isolé sous vide au moins par tronçon.

13. Installation selon l'une quelconque des revendications 8 à 12, **caractérisé en ce que** l'orifice de sortie du liquide de refroidissement (1.3.2) est disposé dans une zone d'aspiration du segment de pompe (1.1) de la pompe d'alimentation (1).

14. Installation selon l'une quelconque des revendication 8 à 13, **caractérisé en ce que** l'orifice de sortie de fluide de refroidissement (1.3.2) est disposé en direction verticale en dessous du segment de pompe (1.1) de la pompe d'alimentation (1).

15. Installation selon l'une quelconque des revendications 8 à 14, **caractérisé en ce qu'**un conduit d'alimentation d'anhydride carbonique (12) est prévu, une addition de CO₂ au fluide de formation recyclé prévu pour le recyclage (4.1) a lieu par le conduit d'alimentation d'anhydride carbonique (12) avant le recyclage du fluide de formation refroidi (4.1) dans le puits de production.
